Europäisches Patentamt

European Patent Office

Office européen des brevets

(19)

(11) Numéro de publication : **0 052 570**
**B1**

(12) # FASCICULE DE BREVET EUROPÉEN

(45) Date de publication du fascicule du brevet :
**28.08.85**

(51) Int. Cl.⁴ : **G 21 C 17/00**

(21) Numéro de dépôt : **81401817.2**

(22) Date de dépôt : **19.11.81**

(54) **Module d'intervention à l'intérieur d'une cuve de réacteur nucléaire.**

(30) Priorité : **19.11.80 FR 8024562**

(43) Date de publication de la demande :
**26.05.82 Bulletin 82/21**

(45) Mention de la délivrance du brevet :
**28.08.85 Bulletin 85/35**

(84) Etats contractants désignés :
**BE CH DE FR GB IT LI SE**

(56) Documents cités :
**DE-A- 2 930 389**
**FR-A- 2 123 409**
**FR-A- 2 242 750**
**FR-A- 2 259 419**
**US-A- 4 174 999**

(73) Titulaire : **Framatome**
**Tour Fiat 1 place de la Coupole**
**F-92400 Courbevoie (FR)**

(72) Inventeur : **Coussau, Jean**
**1 rue Gossec**
**F-75012 Paris (FR)**

(74) Mandataire : **Lavoix, Jean et al**
**c/o Cabinet Lavoix 2, Place D'Estienne D'Orves**
**F-75441 Paris Cedex 09 (FR)**

Jouve, 18, rue St-Denis, 75001 Paris, France

## Description

La présente invention concerne un module d'intervention à l'intérieur d'une cuve de réacteur nucléaire, et plus particulièrement à l'intérieur d'une cuve de réacteur à eau pressurisée lorsque celle-ci a été au moins partiellement vidée de ses composants internes.

Lors des arrêts d'un réacteur, pour rechargement ou pour visite de contrôle systématique de la cuve, il peut être reconnu nécessaire de devoir intervenir à l'intérieur même de la cuve, par exemple pour un examen précis du revêtement des parois ou des tubulures de raccordement du circuit primaire, ou encore pour procéder à des retouches de polissage, de soudure, ou de rechargement local. Lorsque le réacteur a déjà fonctionné, la cuve est évidemment fortement radioactive, ce qui interdit l'accès normal à l'intérieur de celle-ci.

Jusqu'à présent de tels examens ne pouvaient être réalisés que par caméras de télévision télécommandées, et les interventions auraient exigé l'utilisation d'outillages également télécommandés, avec contrôle du travail par ces mêmes caméras. Le positionnement précis de tels outillages dans la cuve, à partir d'une plateforme au-dessus du niveau supérieur de la piscine, pose de tels problèmes techniques qu'on a pratiquement dû renoncer à de tels appareils. En outre ces outillages, plus ou moins automatisés, devraient être programmés à l'avance, ce qui par exemple pour des opérations de polissage avec reprise minimale de métal, est difficilement réalisable lorsque l'on travaille sur des revêtements qui ne peuvent pas présenter une géométrie précise et constante. On pourrait encore envisager de faire descendre un opérateur dans la cuve, mais la lourdeur de l'équipement de protection qui lui serait nécessaire rendrait impossible tout travail de précision.

On connaît par la publication FR-A-2.123.409 un dispositif constitué par une cabine dont les parois et les hublots sont en matériaux protégeant contre les radiations. La cabine introduite dans la cuve d'un réacteur prend appui sur la partie supérieure de celle-ci et peut être mise en rotation autour de son axe vertical. Mais un tel dispositif ne permet que l'inspection visuelle des parois internes de la cuve en vue de détecter d'éventuels défauts ; elle ne permet pas d'intervenir au moyen d'outils sous contrôle visuel direct.

La présente invention permet la réalisation d'un module polyvalent autorisant, à l'intérieur d'une cuve devenue radio-active, les principales opérations de vérification et d'entretien sous la dépendance et le contrôle direct d'un opérateur, et sans gêne pour celui-ci.

L'invention s'applique à un module d'intervention à l'intérieur de la cuve d'un réacteur nucléaire, destiné à être utilisé après enlèvement du couvercle de la cuve et d'au moins une partie des équipements internes, le module comprenant :

— un bâti support muni de prises pour des moyens de levage et comportant une partie fixe munis d'organes d'appui et de centrage sur la partie supérieure de la cuve, et une partie tournante tournant autour de l'axe vertical de la cuve, avec des moyens d'entraînement en rotation,

— une cabine étanche à parois et hublots en matériaux protégeant contre le rayonnement, liée à la partie tournante du bâti support.

Selon l'invention la partie tournante comporte une poutre diamétrale munie de chemins de roulement sur lesquels repose la cabine, avec des moyens pour déplacer la cabine sur la poutre radialement par rapport à la cuve et, sur la paroi extérieure d'une face munie d'un hublot, la cabine comporte un bras porte-outil, monté en porte à faux sur un plateau tournant autour d'un axe perpendiculaire à la face de la cabine, le plateau tournant étant lui-même porté par un chariot déplaçable selon deux directions perpendiculaires dans un plan parallèle à la face de la cabine, avec des moyens commandés depuis l'intérieur de la cabine pour déplacer le chariot et orienter le bras sur celui-ci.

L'invention sera mieux comprise en se référant à un mode de réalisation particulier, donné à titre d'exemple et représenté par les dessins annexés.

La figure 1 est une vue générale, partiellement en élévation et partiellement en coupe, de l'ensemble du module en position de travail à l'intérieur de la cuve d'un réacteur.

La figure 2 est une vue de dessus du même ensemble.

La figure 3 est une vue en perspective du module, isolé du bâti support, mais équipé de la cheminée d'accès du personnel.

Les figures 4 et 5 montrent deux phases caractéristiques de la mise en place du module dans la cuve. Sur la figure 4 le module est en cours d'introduction dans la cuve ; la figure 5 montre la manœuvre de déplacement du bras porte-outil.

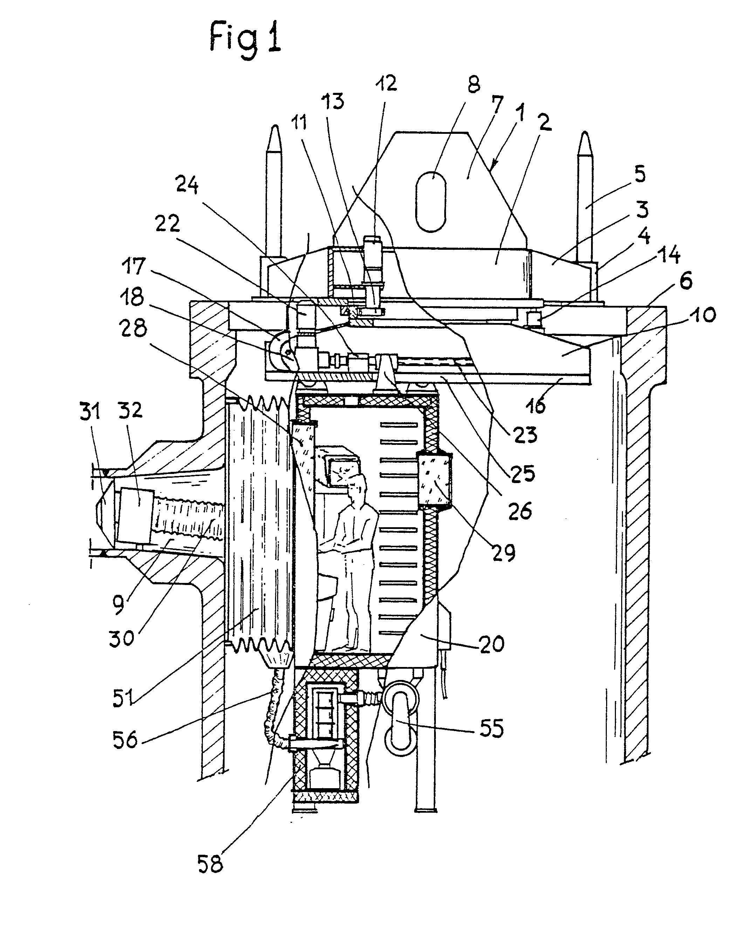

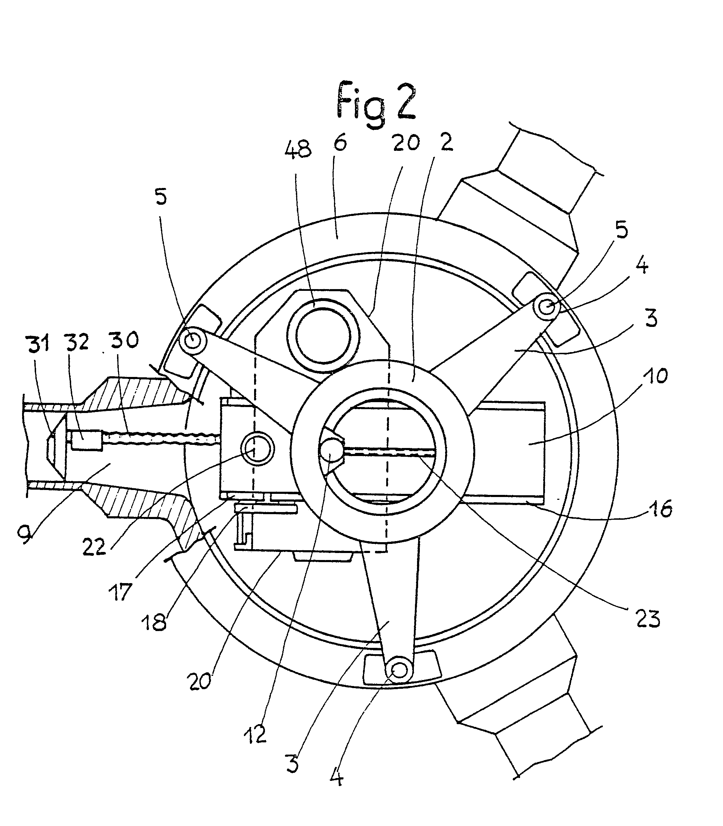

En se référant tout d'abord aux figures 1 et 2, on verra que l'ensemble du module est porté par un bâti support étoilé 1 constitué par un fût central cylindrique 2, et trois branches 3 portant chacune à son extrémité une douille de mise en place 4. Les douilles 4 sont engagées sur des guides de centrage 5 montés sur la bride 6 de fixation du couvercle de la cuve. Une nervure diamétrale 7, munie d'un orifice d'élinguage 8, est solidaire du fût central 2 du bâti.

Une poutre diamétrale 10 est suspendue au bâti 1 par l'intermédiaire d'une couronne à billes 11, centrée sur l'axe de la cuve lorsque le bâti 1 est en position sur la bride 6 de la cuve. Un groupe moto-réducteur frein 12, fixé sur des nervures internes du fût 2, porte en bout d'arbre un pignon 13 qui engrène avec une couronne dentée conjuguée solidaire de la poutre 10. La mise en action du moteur 12 entraîne donc la rotation de la poutre 10 par rapport au bâti 1, et par conséquent par rapport à la cuve. Un vérin d'indexage 14 est utilisé pour immobiliser la poutre 10 en rotation en des positions précises prédéterminées.

La poutre 10 comporte deux ailes latérales 16 qui servent chacune de chemin de roulement pour quatre galets 17 réunis deux à deux par des palonniers 18 articulés en 19 sur des pièces solidaires d'une cabine 20. La cabine 20, qui constitue le module d'intervention proprement dit, est ainsi suspendue à la poutre 10, sur laquelle elle peut être déplacée longitudinalement, c'est-à-dire radialement par rapport à la cuve. Pour faire rouler la cabine sur les rails 16, la poutre est munie d'un groupe moto-réducteur 22 qui entraîne en rotation une vis 23 portée par deux paliers 24 solidaires du plancher de la poutre 10. Ce plancher comporte une lumière longitudinale 25 qui permet le déplacement d'une chandelle 26 solidaire du toit de la cabine, et portant un écrou fixe engagé sur la vis 23, la mise en action du moteur 22 entraîne donc la rotation de la vis 23 dans un sens ou dans l'autre, et par là le déplacement longitudinal de la chandelle 26 et de la cabine 20 qui roule sur les rails 16 par ses galets 17.

La cabine 20, de dimensions intérieures permettant l'évolution aisée d'au moins un opérateur, a toutes ses parois en matériau assurant une bonne protection contre les rayonnements, et par exemple un sandwich composé de deux tôles en acier inoxydable enserrant un remplissage de plomb.

La vision extérieure est assurée par un hublot 28 de grandes dimensions sur la face avant qui constituera la face principale de travail, et par des hublots arrière ou latéraux 29 de plus faible surface. Les hublots sont en verre au plomb de forte épaisseur, assurant le même degré de protection que les parois opaques.

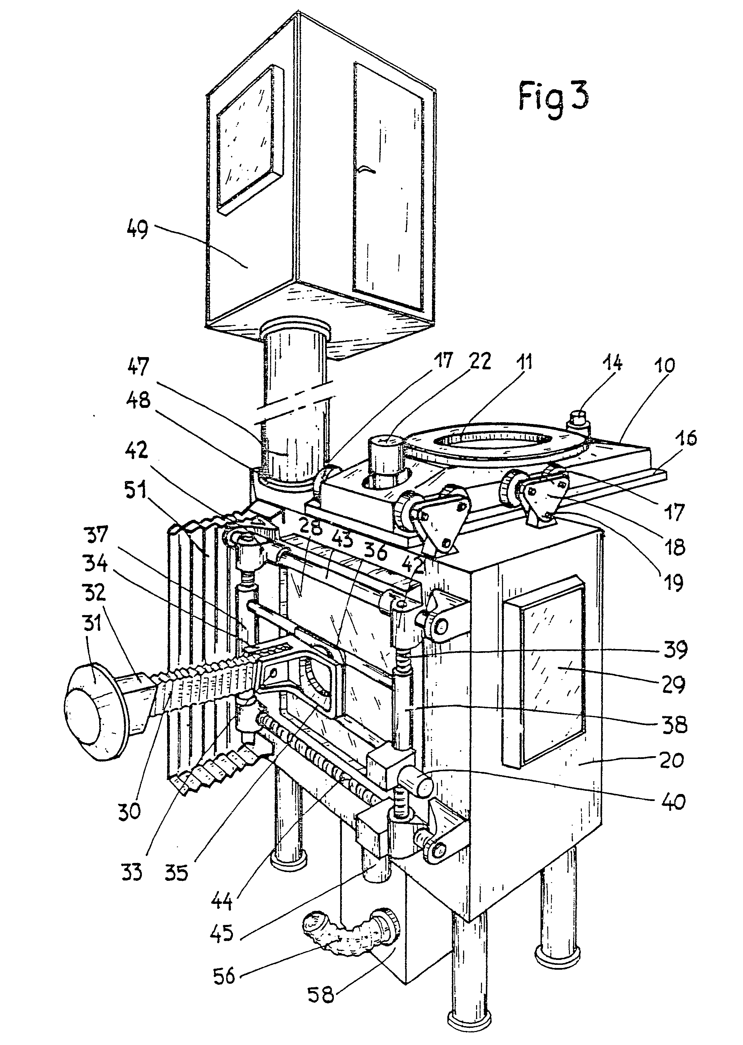

On se référera maintenant de préférence à la figure 3 qui montre plus en détail l'ensemble du bras porte-outil 30 et des moyens de réglage de sa position sur la face avant de la cabine. Le bras porte-outil représenté ici, comme sur l'ensemble des figures, est spécialement destiné au travail dans l'une des tubulures de raccordement du circuit primaire et comporte pour cela à son extrémité libre un tampon de centrage 31. L'outil proprement dit n'est représenté ici que symboliquement en 32, car il peut s'agir selon les besoins, par exemple d'un équipement de meulage, de soudage, ou encore de contrôle par ultrasons.

Le bras 30, dont les organes d'entraînement des outils sont ici protégés par un soufflet, est articulé en 33 sur une partie 34 en forme de chape formée sur un plateau tournant 35. Le plateau 35 est ajouré en son centre, et peut pivoter par une couronne à billes sur un plateau fixe 36 également ajouré en son centre. Pour simplifier le dessin on n'a pas représenté ici les moteurs permettant de faire pivoter le bras 30 autour de l'axe 33, ni le moteur de mise en rotation du plateau 35 sur le plateau 36, car ces moteurs peuvent être de tout type usuel du commerce.

Le plateau 36 est solidaire d'un cadre 37-38 dont les deux éléments tubulaires d'extrémité 37 et 38 enserrent respectivement un tube lisse et une vis 39. Le groupe moto-réducteur 40 entraîne un écrou engagé sur la vis 39, de telle sorte que la mise en action du moteur 40 permet le déplacement vertical de tout le cadre 37-38, et par conséquent du bras 30. Les guides verticaux du cadre 37-38 sont portés par des supports 42, qui de la même façon enserrent deux guides horizontaux 43 et 44, respectivement un tube lisse et une vis. Le groupe moto-réducteur 45, par l'intermédiaire d'un écrou engagé sur la vis 44, permet le déplacement transversal de l'ensemble. On voit qu'on peut ainsi amener le bras 30 en toute position, inclinaison et orientation sur une grande partie de la face avant de travail de la cabine 20. Le hublot 28 qui occupe presque la totalité de cette face permet une grande visibilité depuis l'intérieur de la cabine, y compris dans la zone voisine de l'axe du bras grâce aux ouvertures dans les plateaux 35 et 36.

On verra aussi sur cette figure 3 la cheminée 47 pour l'accès du personnel, représentée ici après raccordement à la bride 48 sur le plafond de la cabine. Une cabine d'accès supérieur 49, au niveau supérieur de la piscine, permet d'utiliser la cheminée 47 comme un sas, la cabine d'intervention 20 étant normalement en légère surpression au moyen d'un équipement autonome interne pour éviter toute entrée de poussières radio-actives. La cheminée d'accès 47 passe entre les branches 3 du bâti support 1 et est mise en place après réglage de la position angulaire de la poutre 10 et de la cabine 20 par rapport au bâti 1.

Egalement pour éviter la dispersion dans la cuve des poussières ou particules détachées par le travail de l'outil 32, toute la zone de travail est confinée par un soufflet 51, qui n'a été représenté que partiellement sur la figure 3, mais qui entoure totalement la face avant de la cabine 20. L'étanchéité sur la paroi interne de la cuve est assurée par un cadre avant au profil de la cuve, équipé d'un joint et plaqué sur la cuve par un système à vérins et bielles, non représenté sur les dessins simplifiés car il ne présente aucune difficulté particulière de réalisation.

On peut également chercher à collecter et capter les poussières radio-actives ainsi confinées. Il est pour cela prévu, sous le plancher de la cabine 20, un groupe d'aspiration 55 susceptible de travailler en circuit fermé sur l'enceinte confinée par le soufflet. Les poussières sont ainsi aspirées au moyen du flexible 56 raccordé à une poche inférieure du soufflet, puis isolées dans un cyclone et par des filtres pour aboutir dans un bidon de récupération. L'ensemble des appareils de séparation et de récupération est inclus dans une enceinte protégée 58, qui peut être séparée de la cabine 20 en fin d'intervention, pour être directement envoyée vers le retraitement ou la décontamination.

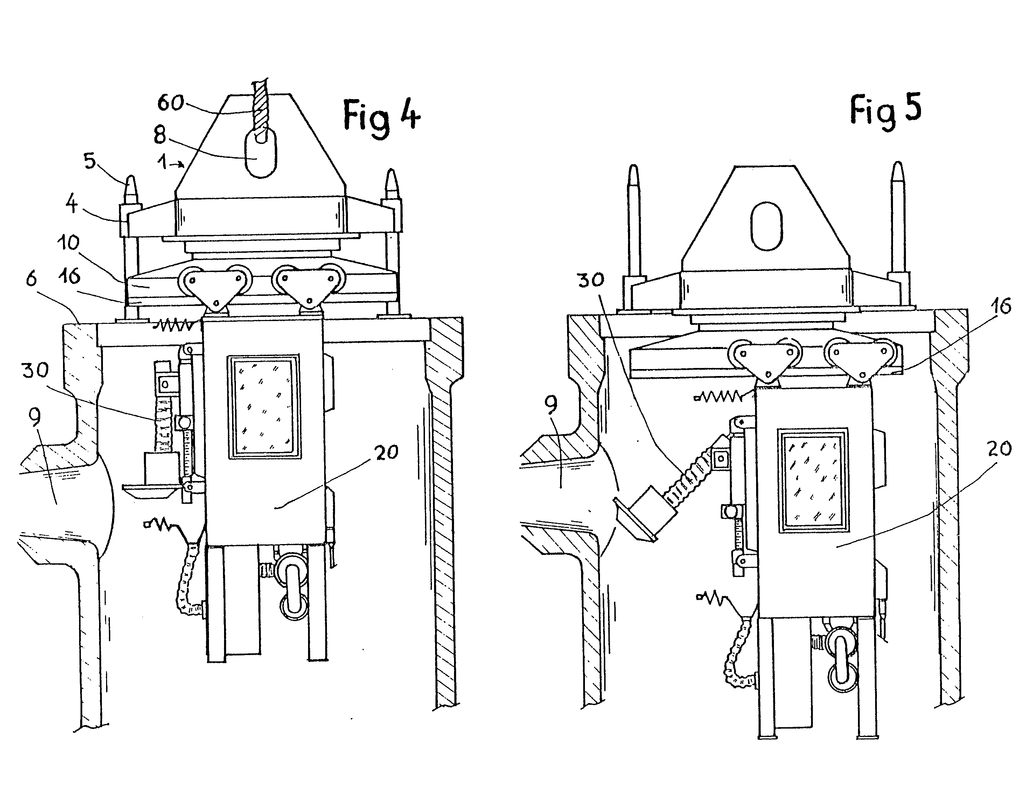

On se référera enfin à l'ensemble des figures 4 et 5 pour comprendre les phases de mise en place du module dans la cuve. La cuve ayant été dégagée de son couvercle et de ses équipements internes, on met en place les guides de centrage 5 sur la bride 6 de fixation du couvercle.

La position des guides de centrage est choisie de façon à ce que les branches 3 du bâti 1 ne gênent pas la mise en place de la cheminée 47 pour la position de travail retenue. Par ailleurs l'ensemble du module a été équipé des outils spécifiques à l'opération à entreprendre. La cabine 20 est amenée au centre de la poutre 10, et le bras 30 est en position repliée le long de la face avant de la cabine. L'ensemble est ainsi équilibré et présente un encombrement radial minimum ; il peut être pris par le pont polaire du bâtiment réacteur au moyen d'une élingue 60 passée dans l'orifice 8.

L'ensemble est alors descendu dans l'axe de la cuve (figure 4), la dernière phase de la descente étant parfaitement guidée par engagement des douilles 4 sur les guides 5, jusqu'à venir en appui sur la bride 6 de fixation du couvercle. Pour venir engager le bras porte-outil 30 dans l'une ou l'autre des tubulures 9 du circuit primaire, la poutre 10 est d'abord réglée en position angulaire de façon à présenter la face avant de la cabine dans l'axe de la tubulure. La cheminée d'accès peut alors être mise en place, le reste des opérations s'effectuant ensuite en commande directe par l'opérateur depuis l'intérieur de la cabine 20. La cabine est éloignée du débouché de la tubulure en roulant sur les rails 16 (figure 5), de façon à permettre le libre débattement du bras 30 pendant son redressement et son réglage de position verticale transversale et angulaire. Il suffit ensuite d'avancer la cabine vers la tuyauterie pour engager l'extrémité du bras et l'outil à l'intérieur de la tuyauterie comme on le voit sur la figure 1.

Bien sûr, un module d'intervention conforme à l'invention peut être utilisé pour faire des inspections ou interventions en un autre niveau de la cuve que celui des tubulures, par exemple en fond de cuve. Il suffit, dans ce cas, de changer seulement la conception de la cabine étanche, en conservant identique le dispositif décrit précédemment permettant à la cabine de se déplacer en rotation et radialement.

Une cabine étanche permettant une intervention en fond de cuve comporte de préférence des hublots en verre ou plomb de forte épaisseur disposés à sa partie inférieure, par exemple sur son plancher, et est adaptée à recevoir, à sa partie inférieure, des appareils d'intervention 31, 32, reliés à la cabine d'une façon semblable à ce qui a été décrit dans le premier exemple de réalisation. Afin que l'intervention dans la partie inférieure de la cuve se fasse dans de bonnes conditions, il est préférable que le plancher de la cabine étanche se trouve à une faible distance par rapport au fond de la cuve ; pour que cette condition soit remplie, on peut, par exemple, concevoir une cabine étanche dont la hauteur est seulement légèrement inférieure à la hauteur de la cuve, ou une cabine plus petite descendue verticalement vers le fond de la cuve.

Bien entendu l'invention n'est pas strictement limitée au mode de réalisation qui vient d'être décrit à titre d'exemple, mais elle couvre également les réalisations qui n'en différeraient que par des détails. Ainsi on pourrait également utiliser un tel module sans bras porte-outil, dans le cas où l'on ne rechercherait que de simples inspections visuelles directes des parois de la cuve des tubulures et du fond de la cuve.

## Revendications

1. Module d'intervention à l'intérieur de la cuve d'un réacteur nucléaire, destiné à être utilisé après enlèvement du couvercle de la cuve et d'au moins une partie des équipements internes, le module comprenant :
— un bâti support (1) muni de prises (8) pour des moyens de levage et comportant une partie fixe (2) munis d'organes d'appui et de centrage (3, 4) sur la partie supérieure (6) de la cuve, et une partie tournante (11) tournant autour de l'axe vertical de la cuve, avec des moyens (12, 13) d'entraînement en rotation,
— une cabine étanche (20) à parois et hublots en matériaux protégeant contre le rayonnement, liée à la partie tournante (11) du bâti support (1), caractérisé par le fait que la partie tournante (11) comporte une poutre diamétrale (10) munie de chemins de roulement (16) sur lesquels repose la cabine (20), avec des moyens (22, 23, 26) pour déplacer la cabine (20) sur la poutre (10) radialement par rapport à la cuve, et par le fait que sur la paroi extérieure d'une face munie d'un hublot, la cabine (20) comporte un bras porte-outil (30), monté en porte à faux sur un plateau (35) tournant autour d'un axe perpendiculaire à la face de la cabine, le plateau tournant (35) étant lui-même porté par un chariot (37, 38) déplaçable selon deux directions perpendiculaires dans un plan parallèle à la face de la cabine, avec des moyens (40, 45) commandés depuis l'intérieur de la cabine pour déplacer le chariot (37, 38) et orienter le bras (30) sur celui-ci.

2. Module d'intervention selon la revendication 1, caractérisé par le fait que le bras (30) est articulé sur le plateau tournant (35) et comporte des moyens commandés depuis l'intérieur de la cabine pour régler son inclinaison entre une position entièrement repliée parallèlement à la face de la cabine et une position entièrement déployée perpendiculairement à la face de la cabine.

3. Module d'intervention selon l'une des revendications 1 ou 2, caractérisé par le fait que le bras porte-outil (30) et son dispositif de déplacement sont montés sur une face verticale latérale de la cabine.

4. Module d'intervention selon l'une des revendications 1 ou 2, caractérisé par le fait que le bras porte-outil (30) et son dispositif de déplacement sont montés sur la face constituant le fond de la cabine.

5. Module d'intervention selon la revendication 4, caractérisé par le fait que la cabine est disposée dans la cuve de façon que son fond soit disposé à une distance du fond de la cuve permettant que les outils puissent intervenir sur ce fond de cuve.

6. Module d'intervention selon la revendication 1, caractérisé par le fait qu'il comporte un équipement interne autonome de pressurisation de l'intérieur de la cabine.

7. Module d'intervention selon la revendication 1, caractérisé par le fait que la face de la cabine (20) munie du bras porte-outil comporte en outre un soufflet télescopique étanche (51), fixé à la face de la cabine, avec des moyens pour venir appliquer de façon étanche l'extrémité libre du soufflet contre la paroi interne de la cuve, en entourant la zone d'action du bras porte-outil (30).

8. Module d'intervention selon la revendication 7, caractérisé par le fait qu'il est muni d'un groupe (55, 58) d'aspiration et de récupération des poussières et copeaux résultant du travail de l'outil.

9. Module d'intervention selon la revendication 8, caractérisé par le fait que les organes de récupération des poussières et copeaux sont compris dans une enceinte (58) en matériau protégeant contre les rayonnements, et montée de façon amovible sur une paroi extérieure de la cabine (20).

## Claims

1. An intervention module for the interior of the tank of a nuclear reactor, for use after the removal of the tank cover and of at least a part of the internal equipment, the module comprising :
— a support base (1) provided with holding means (8) for hoisting means and including a fixed part (2) provided with bearing and centering elements (3, 4) on the upper part (6) of the tank, and a rotatable part (11) rotatable about the vertical axis of the tank with means (12, 13) for driving in rotation.
— a fluidtight cabin (20) having walls and portholes of materials protective against radiation and connected to the rotatable part (11) of the support frame (1),
characterised in that the rotatable part (11) includes a diametral beam (10) provided with runways (16) on which the cabin (20) bears with means (22, 23, 26) for shifting the cabin (20) on the beam (10) radially of the tank, and in that the cabin (20) comprises, on the outer wall of a side provided with a port-hole, a tool holder arm (30) which is mounted in a cantilever manner on a plate (35) which is rotatable about an axis perpendicular to the side of the cabin, the rotatable plate (35) being itself carried by a carriage (37, 38) which is movable in two perpendicular directions in a plane parallel to the side of the cabin, with means (40, 45) controlled from the inside of the cabin for moving the carriage (37, 38) and orienting the arm (30) on the latter.

2. An intervention module according to claim 1, characterised in that the arm (30) is pivotally mounted on the rotatable plate (35) and includes means controlled from the inside of the cabin for adjusting its inclination between a fully folded-back position in which it is parallel to the side of the cabin and a fully opened-out position in which it is perpendicular to the side of the cabin.

3. An intervention module according to claim 1 or 2, characterised in that the tool-holder arm (30) and its shifting device are mounted on a vertical lateral side of the cabin.

4. An intervention module according to claim 1 or 2, characterised in that the tool-holder arm (30) and its shifting device are mounted on the side constituting the bottom of the cabin.

5. An intervention module according to claim 4, characterised in that the cabin is disposed in the tank in such manner that its bottom is disposed at a distance from the bottom of the tank which permits the tools to operate on this tank bottom.

6. An intervention module according to claim 1, characterised in that it comprises an autonomous internal equipment for pressurizing the interior of the cabin.

7. An intervention module according to claim 1, characterised in that the side of the cabin (20) provided with the tool-holder arm further comprises a fluidtight telescopic bellows (51) fixed to the side of the cabin with means for applying in a fluidtight manner the free end of the bellows against the inner wall of the tank by surrounding the operating zone of the tool-holder arm (30).

8. An intervention module according to claim 7, characterised in that it is provided with a unit (55, 58) for aspirating and recovering dust and cuttings resulting from the operation of the tool.

9. An intervention module according to claim 8, characterised in that the means for recovering dust and cuttings are within an enclosure (58) which is made from a material protective against radiations and is movably mounted on an outer wall of the cabin (20).

## Patentansprüche

1. Wartungseinheit für den Innenraum eines Reaktorbehälters zur Verwendung nach der Abnahme des Behälterdeckels und wenigstens eines Teils der Innenausrüstung, wobei die Einheit enthält :
— ein Traggestell (1), das mit einer Aufnahme (8) für eine Hubeinrichtung versehen ist und aufweist : einen feststehenden Teil (2) der mit Organen (3, 4) zur Abstützung und Zentrierung auf dem Oberteil (6) des Behälters versehen ist, und einen drehbaren Teil (11), der um die senkrechte Achse des Behälters drehbar ist und eine Einrichtung (12, 13) für den Drehantrieb aufweist,
— eine mit dem drehbaren Teil (11) des Traggestells verbundene dichte Kabine (20) mit gegen die Strahlung schützenden Wänden und Kabinenfenstern,
dadurch gekennzeichnet, daß der drehbare Teil (11) einen diametralen Träger (10) mit Rollbahnen (16) aufweist, auf denen die Kabine (20) ruht, mit einer Einrichtung (22, 23, 26) zum Verschieben der Kabine (20) auf dem Träger (10) radial zum Behälter, und daß die Kabine (20) an der Außenseite einer mit dem Kabinenfenster versehenen Wand einen Werkzeugtragarm (30) aufweist, der frei überstehend an einer Platte (35) befestigt ist, die um eine zur Kabinenwand senkrechte Achse drehbar ist, wobei die drehbare Platte ihrerseits auf einem Schlitten (37, 38) getragen wird, der in zwei zueinander senkrechten Richtungen in einer zur Kabinenwand parallelen Ebene verschiebbar ist, mit einer vom Innenraum der Kabine aus gesteuerten Einrichtung (40, 45) zum Verschieben des Schlittens (37, 38) und Ausrichten des Arms (30) auf diesem.

2. Wartungseinheit nach Anspruch 1, dadurch gekennzeichnet, daß der Arm (30) an der drehbaren Platte (35) angelenkt ist und eine vom Innenraum der Kabine aus gesteuerte Einrichtung aufweist zum Einstellen seiner Neigung zwischen einer parallel zur Kabinenwand völlig eingeklappten Stellung und einer senkrecht zur Kabinenwand völlig ausgeklappten Stellung.

3. Wartungseinheit nach einem der Ansprüche 1 oder 2, dadurch gekennzeichnet, daß der Werkzeugtragarm (30) und seine Verschiebevorrichtung an einer senkrechten Seitenwand der Kabine befestigt sind.

4. Wartungseinheit nach einem der Ansprüche 1 oder 2, dadurch gekennzeichnet, daß der Werkzeugtragarm (30) und seine Verschiebevorrichtung an der den Kabinenboden bildenden Wand befestigt sind.

5. Wartungseinheit nach Anspruch 4, dadurch gekennzeichnet, daß die Kabine im Behälter derart angeordnet ist, daß ihr Boden sich in einem Abstand vom Behälterboden befindet, der ein Einwirken der Werkzeuge auf diesen Behälterboden gestattet.

6. Wartungseinheit nach Anspruch 1, gekennzeichnet durch eine unabhängige innere Anlage zum unter Druck setzen des Kabineninnenraums.

7. Wartungseinheit nach Anspruch 1, dadurch gekennzeichnet, daß die mit dem Werkzeugtragarm versehene Kabinenwand ferner einen an der Kabinenwand befestigten teleskopartigen dichten Balg (51) aufweist, mit einer Einrichtung zum dichten Anlegen des freien Balgendes an der Innenwand des Behälters unter Umschreibung der Aktionszone des Werkzeugtragarms (30).

8. Wartungseinheit nach Anspruch 7, gekennzeichnet durch eine Gruppe (55, 58) zum Ansaugen und Zurückgewinnen von von der Arbeit des Werkzeugs stammenden Staubteilchen und Spänen.

9. Wartungseinheit nach Anspruch 8, dadurch gekennzeichnet, daß die Organe zum Zurückgewinnen von Staubteilchen und Spänen in einem Gefäß (58) enthalten sind, das aus einem gegenüber der Strahlung schützenden Material besteht und an einer Außenwand der Kabine (20) abnehmbar befestigt ist.

Fig 1

0 052 570

Fig 2

Fig 3

Fig 5

16
20
30
9

Fig 4

60
8
1
5
4
10
16
6
30
9
20

4